# EUROPEAN PATENT SPECIFICATION

(11) **EP 4 165 974 B1**
(45) Date of publication and mention of the grant of the patent: **31.07.2024**
(21) Application number: 22201382.3
(22) Date of filing: 13.10.2022
(51) Int. Cl.: A01D 34/66, A01D 34/81, A01D 34/82, A01B 63/02

(54) **LAWN MOWER WITH CUTTING ROTOR COVER GROUP**
MÄHER MIT SCHNEIDROTORABDECKUNGSGRUPPE
TONDEUSE À GAZON AVEC GROUPE DE COUVERCLE DE ROTOR DE COUPE

(30) Priority: 15.10.2021 IT 202100026501
(43) Date of publication of application: 19.04.2023
(73) Proprietor: Saltarin, Luciano, Piacenza d'Adige (PD) (IT)
(72) Inventor: Saltarin, Luciano, Piacenza d'Adige (PD) (IT)
(74) Representative: Dall'Olio, Christian

(56) References cited:
- EP-A1- 1 782 671
- DE-C2- 4 428 288
- DE-U1- 29 503 464
- US-A- 3 608 284

## Description

The present invention relates to the sector of grass cutting apparatus in general, in particular mowers or cutters, having cutting rotors with a substantially vertical rotation axis and of the type with a variable cutting width. The invention relates to the guarding or covering of the cutting rotors, especially in preventing contact with moving parts and the uncontrolled expulsion of material, by means of a cutting rotor covering assembly, and is particularly applicable in mower with four cutting rotors. In the reference sector the rotors covering assembly is usually known by the terms "plate", "case", "casing", "guard", "housing" or chassis; no technical difference exists between the various names.

Numerous mowers are known having a plurality of cutting rotors which can change the cutting width and, consequently, the extension of the cutting rotor covering assembly. Some of these comprise articulated wings, as in the case described in GB 2523120 A. Others include reciprocal movements of the cutting rotors while maintaining the respective axes vertical or substantially vertical, i.e. with displacements that lie on a horizontal or substantially horizontal plane, as described in EP 1782671 A1. Cutting rotor covering assemblies with articulated wings have numerous drawbacks, for example from the point of view of dimensions, safety and management of the mechanical transmission of power towards the cutting rotors. In EP 1782671 A1 each cutting rotor in fact works autonomously and has a respective covering: the benefits given by the superposing of the cutting areas of the adjacent cutting rotors are less effective or are absent and, at the same time, the dimensions in the longitudinal direction or movement direction are necessarily greater in order to guarantee the overlapping of the cutting areas of the front and rear cutting rotors.

EP 3469865 A1 describes a mower with a first part having cutting rotors with a vertical rotation axis and a second part with a horizontal rotation axis. The second part obviates the defects of the cut of the first part in a way alike the front cutting rotor of EP 1782671 A1. Beneath the rotors covering assembly of the first part of EP 3469865 A1 the cutting areas of the two cutting rotors are detached from one another even in the minimum cutting width condition, thus not cutting the grass located between the two areas and increasing the overall size in a transversal direction to the advancement direction given a same diameter of the cutting rotors. This last aspect becomes more relevant in the case of further cutting rotors, for example three or four cutting rotors.

The use of three cutting rotors aligned or substantially aligned in the transversal direction to the movement direction improves the cut but necessarily leads to an accumulation of cut material on at least one edge of the mower.

Further mowers can e.g. be found in DE 295 03 464 U1, DE 44 28 288 C2 and US 3 608 284 A.

Briefly, the numerous solutions propose in the past are complex, inefficient and/or unwieldy as they clash with the limitations imposed by the crossing of the cutting rotor covering assembly by the mechanical transmission shafts necessary for setting the cutter wings in rotation.

The present invention intends to obviate one or more drawbacks in the prior art solutions.

A first aim of the present invention is to provide a mower with a variable cutting width which is compact and which guarantees good cutting performance, especially when the advancement velocity is fast.

An aim of some embodiments is to prevent the formation of lateral accumulations of cut material.

A further aim of some embodiments is to limit the size of the mower in the movement direction.

These and other aims, which will be obvious to the expert in the sector from a reading of the following text, are attained by means of a mower according to the claims.

Specific embodiments of the invention will be described in the following part of the present description, according to what is set down in the claims and with the aid of the accompanying figures, in which:
- figure 1 is an axonometric view from above of an embodiment of a mower according to the invention in a first operating condition;

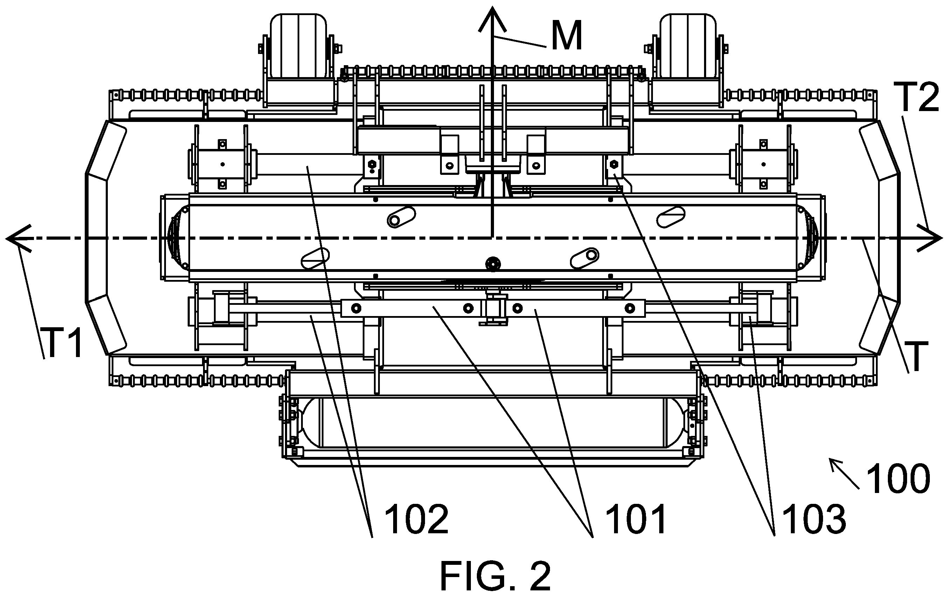

- figure 2 is a view from above of the mower of figure 1 in a second operating condition;

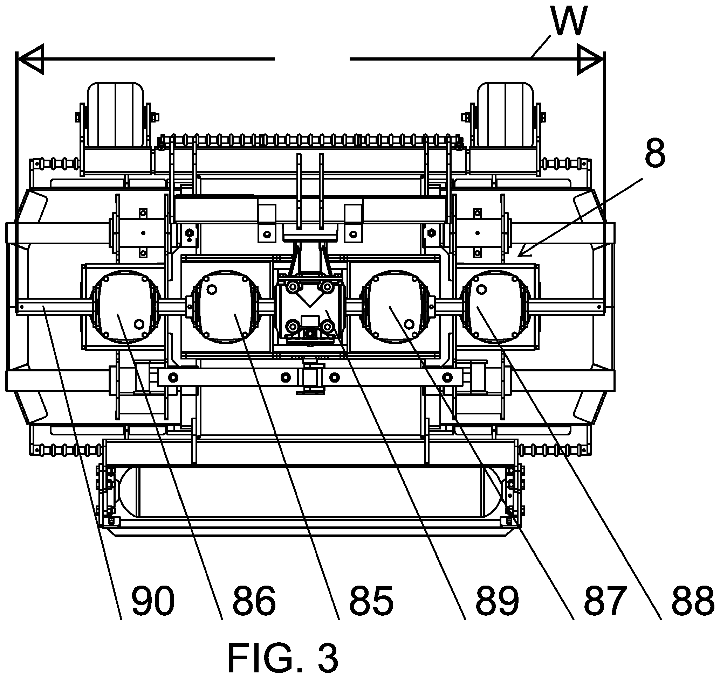

- figure 3 is a view from above of the mower of figure 1 in the first operating condition with some components removed better to view the details of interest;
- figure 4 is an axonometric view from above of a detail of the mower of figure 1 in the second operating condition and with some components removed better to view the details of interest;
- figure 5 is an axonometric view from below of a detail of the mower of figure 1 in the second operating condition and with some components removed better to view the details of interest;
- figure 6 is a view from above of the mower of figure 1 in the second operating condition;

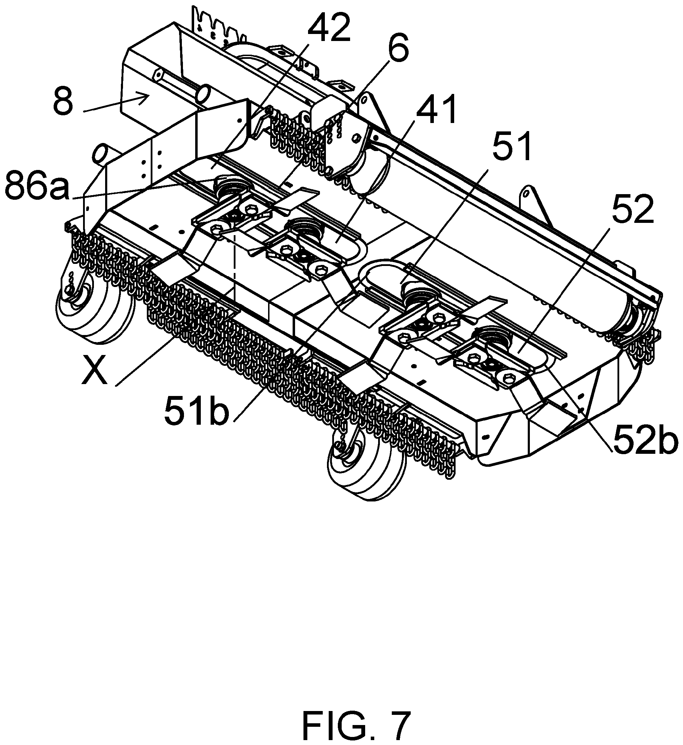

- figure 7 is an axonometric view from above of the mower of figure 1 in the first operating condition;
- figure 8 is an axonometric view from below of a detail of the mower of figure 1 in the second operating condition, with a closing part removed;

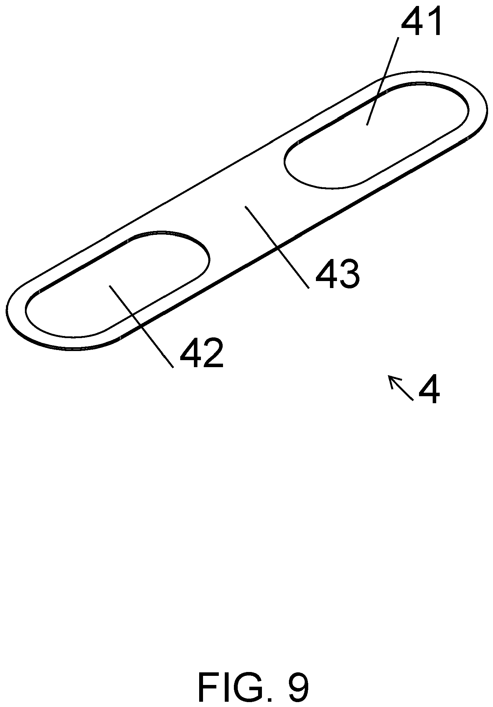

- figure 9 is an axonometric view of a closing part of a kit according to the invention;
- figure 10 is an axonometric view from below of a detail of the mower of figure 1 in an intermediate position between the second operating condition and the first operating condition, i.e. during the course of the reduction in the cutting width;
- figure 11 is a diagram of the mower of figure 1.

With reference to the appended figures, reference numeral 100 denotes a mower with a variable cutting width (W) with respect to the movement direction (M).

An embodiment of the device (1) comprises cutting rotors (71, 72, 73, 74) of a type having an axis of rotation (X) that is vertical with respect to the ground surface (S), transmission means (8) for transmitting the motion and a cutting rotors (71, 72, 73, 74) cover assembly (10) for covering the cutting rotors (71, 72, 73, 74) so as to prevent access to moving parts and/or confine material, typically cut grass or detritus.

The transmission means (8) comprise shafts (81, 82, 83, 84), each coupled to a respective cutting rotor (71, 72, 73, 74) so as to set the cutting rotor (71, 72, 73, 74) in rotation about a respective rotation axis (X).

The cutting rotors (71, 72, 73, 74) cover assembly (10) comprises a first part (1) which has a first hole (11) housing a first shaft (81) and a second part (2) which has a second hole (21) housing a second shaft (82).

The first shaft (81) is coupled to a first cutting rotor (71) and is rotationally connected to the first part (1) and the second shaft (82) is coupled to a second cutting rotor (72) and is rotationally connected to the second part (2).

The second part (2) and the first part (1) are mutually movable according to a first direction (T) transversal to the movement direction (M) of the mower (100) between a first position and a second position in which the distance between the second shaft (82) and the first shaft (81) is greater than in the first position so as to vary the cutting width (W).

The displacement in the first direction (T) of the second part (2) with respect to the first part (1) between the first position and the second position is advantageously greater than a first distance in the first direction (T) between the edges of the first hole (11) and the second hole (21) in the first position.

The second part (2) has a recess (22) which faces towards the first shaft (81) so as to accommodate the first shaft (81) at least in the first position.

The cutting rotors (71, 72, 73, 74) cover assembly (10) comprises a closing part (4). The closing part (4) comprises a first seat (41) which houses the first shaft (81), a second seat (42) which houses the second shaft (82) and, between the first and second shaft (81, 82), a solid part (43), i.e. a part without openings.

The first seat (41) extends so that in the first position the closing part (4) is movable with respect to the first shaft (81) by a first displacement in the first direction (T) in a first sense (T1).

The second seat (42) extends so that in the first position the closing part (4) is movable with respect to the second shaft (82) by a second displacement in the first direction (T) in a second sense (T2), opposite the first sense (T1).

The scalar sum of the first displacement and of the second displacement is greater than the first distance so as to allow a displacement between the first part (1) and the second part (2) that is greater than the first distance.

Further, the solid part (43) extends in the first direction (T) so as to be at the part of the recess (22) that is not covered by the first part (1).

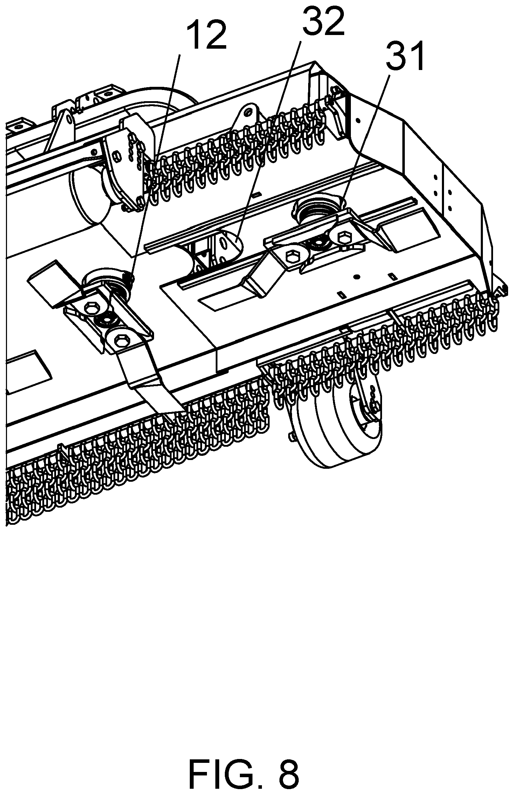

The mower (100) of the invention enables obviating the geometric limits due to the crossing of the cutting rotors (71, 72, 73, 74) cover assembly (10) by the shafts (81, 82, 83, 84), while guaranteeing the functional continuity of the covering. Figure 8 enables observation of the opening which is created between the first part (1) and the second part (2) should the cutting rotors (71, 72, 73, 74) cover assembly (10) not comprise the closing part (4) described herein.

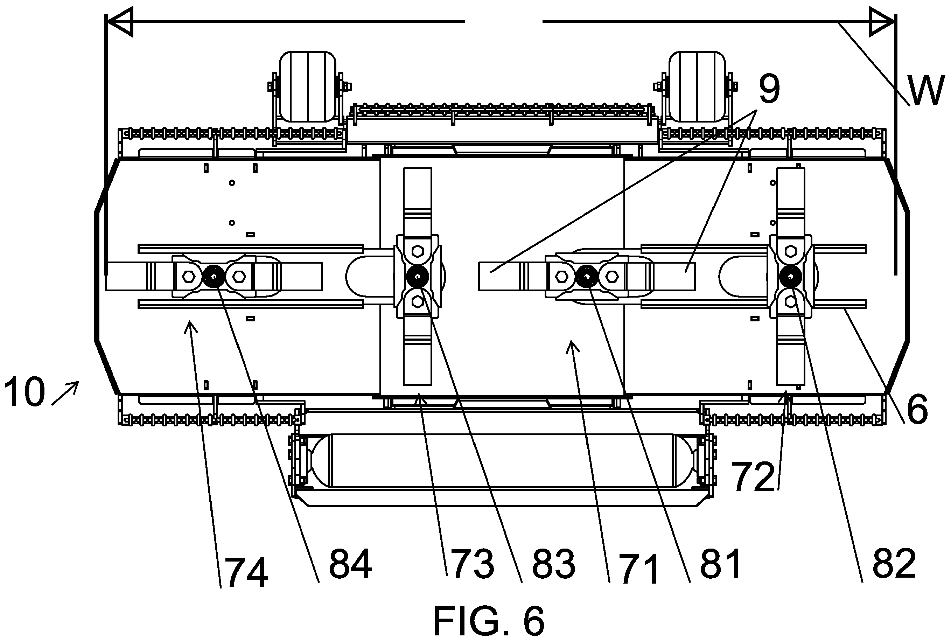

The characteristics of the mower (100) according to the invention enable reciprocal arrangements of cutting rotors (71, 72, 73, 74) that are otherwise unobtainable, as will be more fully described in the following and as is immediately visible in figure 6 from the arrangement of the shafts (81, 82, 83, 84) with respect to the first part (1). These arrangements facilitate the implementation of embodiments characterised by a greater efficiency in the cut, especially given a same overall dimension and/or manageability of the mower (100), with respect to the solutions in the prior art.

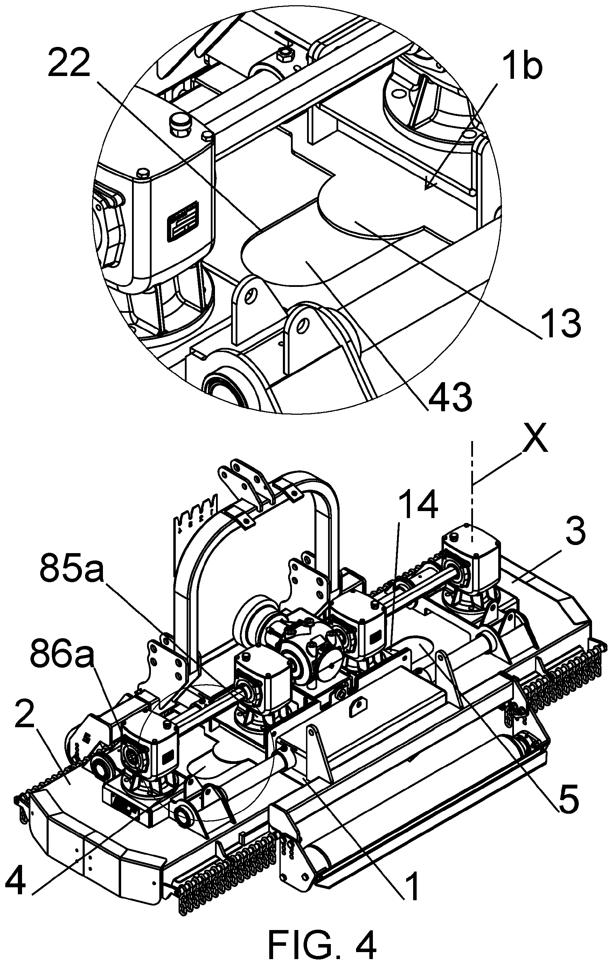

The extension of the solid part (43) required to guarantee the covering of the part of the recess (22) not covered by the first part (1) depends on a series of design choices, for example on the extension of the first part (1) at the recess (22), as the view of the detail of figure 4 suggests, or on the minimum overlapping of the first part (1) and of the second part (2), visible in figure 6.

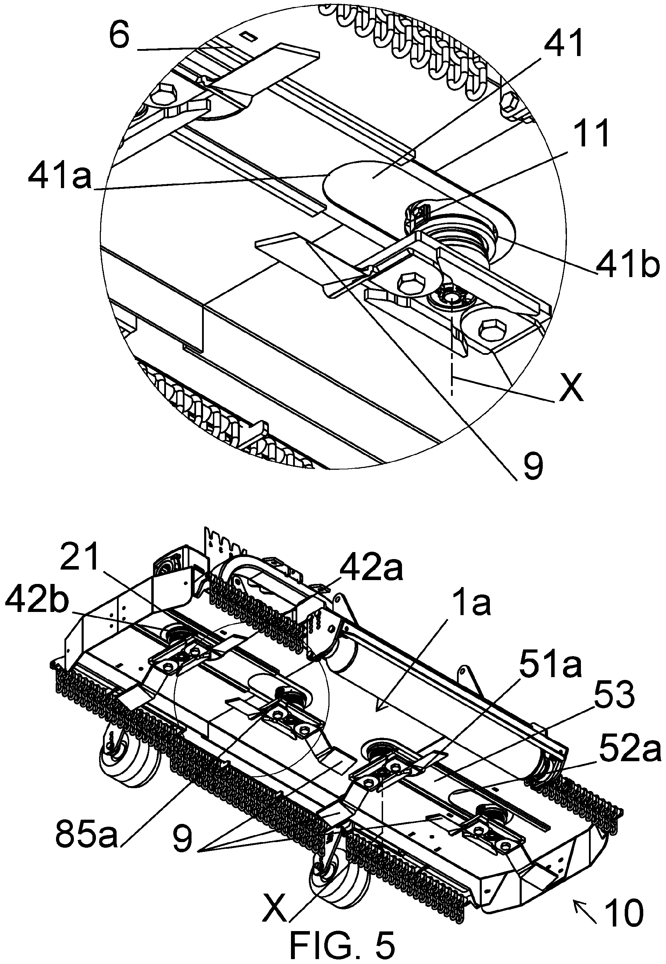

From the comparison between the detail of figure 4 and the detail of figure 5, it emerges that the extension required to the solid part (43) limits the entity of the first displacement in relation to the first distance. For example, with reference to the embodiment visible in the detail of figure 5, a greater extension of the first seat (41) and a greater displacement of the first shaft (81) would reduce the extension of the solid part (43) up to causing the formation of an undesired opening.

The recess (22) preferably has an extension in the first direction (T) that is greater than that of the first distance, such as to facilitate reciprocal positions between the first shaft (81) and the second shaft (82) that are especially narrow and/or such as to limit the extension in the first direction (T) of the first part (1).

The second part (2) is preferably interposed between the closing part (4) and the first part (1) and wherein the cutting rotors (71, 72, 73, 74) cover assembly (10) comprises at least a support that is integral with the first part (1) or with the second part (2) and which supports the closing part (4).

The first part (1) is typically integral with the connection means for connecting to a tractor and is integral with the gear box (89) which receives the mechanical energy from the power take-off of the tractor. Normally the first part (1) must bear various components on a second side (1b) opposite the first side (1a) facing towards the first cutting rotor (71): it is therefore preferable for the second part (2) to be positioned between the first part (1) and the ground surface (S) or on the first side (1a).

The working environment and the continuous vibrations of the cutting rotors (71, 72, 73, 74) and the transmission means (8) make the couplings imprecise or allow play, and can lead to undesired movements of the components. The preferred arrangement as described in the foregoing of the closing part (4) is simple, effective and sturdy; further, it does not require specifications or modifications to the arrangement of the components on the second side (1b) of the first part (1). In fact, to introduce the closing part (4) on the second side (1b), modifications are necessary which are relatively invasive and which lead to movements among the less secure parts, with the risk of blocking or jamming due to vibrations and/or detritus.

The at least a support preferably comprises a guide (6) integral with the second part (2) shaped in such a way that the closing part (4) translates with respect to the second part (2). As can be observed in figure 6, the guide (6) can comprise two L-shaped profiled members which support the closing part and which are arranged in the first direction (T), thus forming a prismatic pair with the closing part (4).

The transmission means (8) preferably comprise a first gear box (85) which comprises a first case (85a) internally of which the first shaft (81) rotates and a second gear box (86) which comprises a second case (86a) internally of which the second shaft (82) rotates.

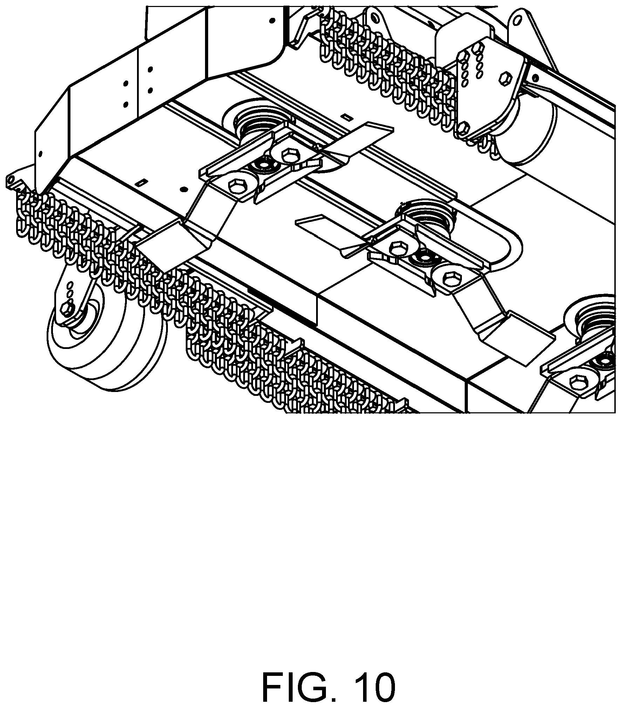

Likewise, the figures also illustrate a third gear box (87) and a fourth gear box (88). As can be observed by way of example in figure 5, at least the second case (86a) engages the second hole (21) and the second seat (42) so to move the closing part (4) in the displacement between the first position and the second position and vice versa, as illustrated by way of example in figure 10.

The use of the second case (86a) for the movement of the closing part (4) is particularly simple and exploits a sturdy element typically present in the mower (100).

The first case (85a) also preferably engages the first hole (11) and the first seat (41), both the first seat (41) and the second seat (42) are slots and in the first position and in the second position the first case (85a) and the second case (86A) are in contact with or in proximity of the ends (41a, 41b, 42a, 42b) of the slots.

The first case (85a) and the second case (86a) in this way limit or prevent undesired displacements of the closing part (4), typically though not exclusively caused by the vibrations.

The figures also illustrate the ends (51a, 51b, 52a, 52b) of the slots of a further closing part (5), described in the following. In both cases the letter "a" denotes the closer end to the shafts (81, 82, 83, 84) in the first position and in the narrow position while the letter "b" denotes the closer end to the shafts (81, 82, 83, 84) in the second position and in the extended position.

To more fully clarify the meaning of the teachings of the present document, in the case where the first seat (41) and the second seat (42) house a first case (85a) and a second case (86a) the first distance can refer to the distance thereof in the first direction (T) in the first position as this represents the real extension limit of the material of one part with respect to the shaft of the other part.

The first seat (41) is preferably a slot, more preferably both the first seat (41) and the second seat (42) are identical slots.

Typically the distance between the rotation axis (X) of the first cutting rotor (71) and the rotation axis (X) of the second cutting rotor (72) in the second position is less than the sum of the radius (71a) of the first cutting rotor (71) and the radius (72a) of the second cutting rotor (72), so as to guarantee the superposing of the cutting areas of the first cutting rotor (71) and of the second cutting rotor (72).

The radius (71a) of the first cutting rotor (71) and the radius (72a) of the second cutting rotor (72) is preferably greater than the distance between the rotation axis (X) of the first cutting rotor (71) and the rotation axis (X) of the second cutting rotor (72) in the first position. Therefore the effectiveness of the cut is increased while guaranteeing that the mower (100) is compact.

The first part (1) preferably comprises a protrusion (13), observable for example in figure 4, which projects towards the second shaft (82) in such a way as to be at a part of the recess (22). It is therefore possible to limit the extension of the first part (1) only in the area where it is actually necessary for the covering.

Figure 4 also illustrates a further protrusion (14) entirely alike to the protrusion (13).

Though the mower (100) of the invention might comprise only one movable part with respect to the first part (1), it is preferable that the above teachings are also applied to the other side of the first part (1).

In this case the management of the cutting width (W) can take place according to various logics but it is preferable for the variations to be the same on both sides. The preferred embodiments as described in the foregoing are directly applicable also to the other side, even though they are not necessarily described in relation to the components discussed in the following, or if they make use of components that are not described in the following.

The mower (100) preferably comprises a third cutting rotor (73) and a fourth cutting rotor (74) on the side of the first cutting rotor (71) opposite the second cutting rotor (72). The third cutting rotor (73) is interposed between the first cutting rotor (71) and the fourth cutting rotor (74).

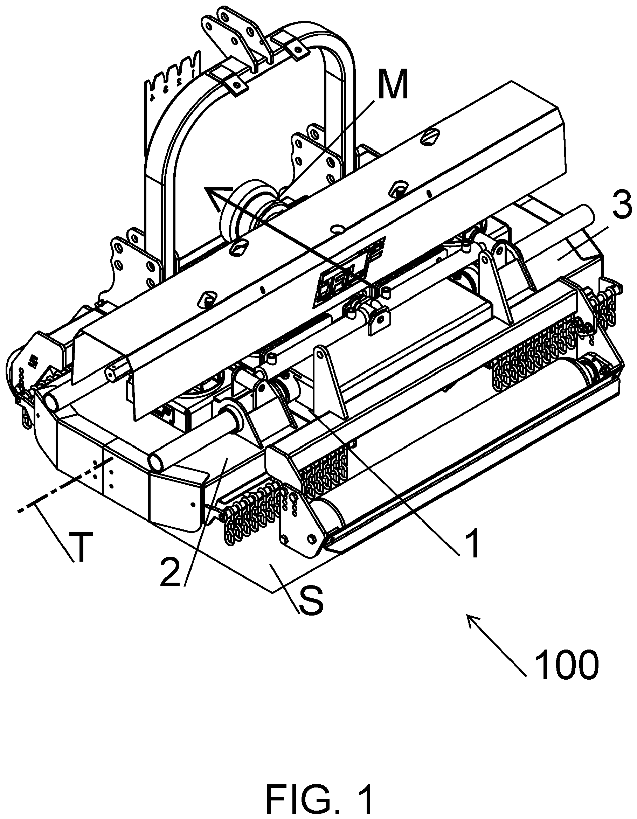

The rotation sense (71b, 72b, 73b, 74b) of each of the cutting rotors (71, 72, 73, 74) is opposite the rotation sense of the adjacent cutting rotor or of the adjacent cutting rotors (71, 72, 73, 74) and the rotation sense (71b, 72b, 73b, 74b) is such as to push the grass respectively between the first cutting rotor (71) the second cutting rotor (72) and between the third cutting rotor (73) and the fourth cutting rotor (74), with the mower (100) moving in the movement direction (M) and in the movement sense. The movement sense of the embodiment of figure 1 is illustrated by the arrow in the movement direction (M). Clearly the mower (100) is also operative in the other direction but without any of the benefits.

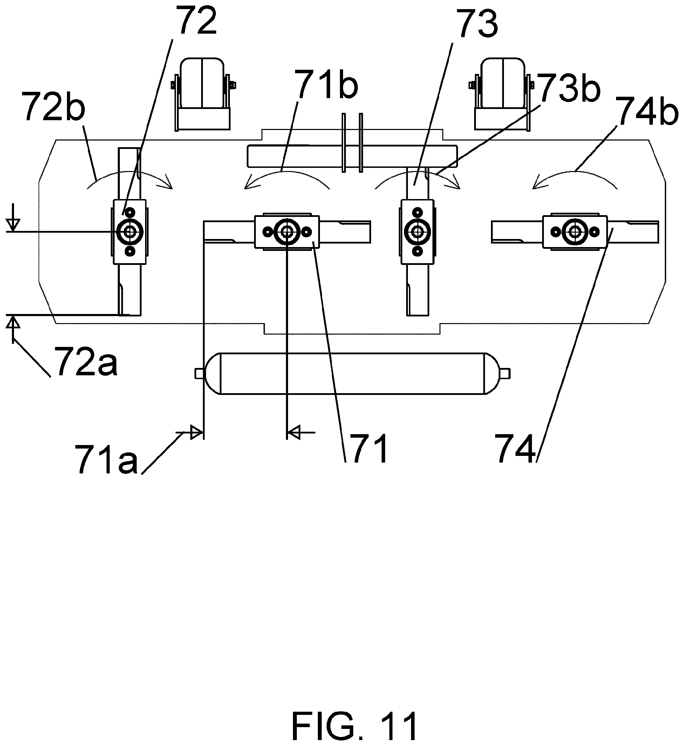

As figure 11 clarifies, these characteristics enable pushing the cut material to between the shafts (81, 82, 83, 84), thus improving the effectiveness of the cut and avoiding the formation of lateral accumulations of cut material. In other words, the rotation senses (71b, 72b, 73b, 74b) of the cutting rotors (71, 72, 73, 74) are such as to limit or avoid lateral unloading.

The cutting areas or action areas of the cutting rotors (71, 72, 73, 74) are preferably overlapped, i.e. the circles formed by the cutter wings (9) thereof, visible for example in figure 11, intersect one another.

The cutting rotors (71, 72, 73, 74) are preferably aligned.

The cutting rotors (71, 72, 73, 74) of the mower (100) preferably consist of four cutting rotors (71, 72, 73, 74). The version with four cutting rotors (71, 72, 73, 74) responds effectively to the need for compactness, maximum cutting width (W) and effectiveness of cut, as they do not form lateral accumulations of cut grass.

Preferably:
- the first part (1) comprises a further hole (12) housing a third shaft (83) coupled to the third cutting rotor (73) and rotationally connected to the first part (1);
- the cutting rotors (71, 72, 73, 74) cover assembly (10) comprises a third part (3) which has a third hole (31) housing a fourth shaft (84) coupled to the fourth cutting rotor (74) and rotationally connected to the third part (3);
- the third part (3) is movable with respect to the first part (1) according to the first direction (T) between a narrow position and a extended position in which the distance between the fourth shaft (84) and the third shaft (83) is greater than in the narrow position so as to cooperate with the second part (2) for varying the cutting width (W);
- the displacement in the first direction (T) of the third part (3) with respect to the first part (1) between the narrow position and the extended position is greater than a second distance in the first direction (T) between the edges of the further hole (12) and of the third hole (31) in the narrow position;
- the third part (3) has a further recess (32) which faces towards the third shaft (83) so as to accommodate the third shaft (83) at least in the narrow position;
- the cutting rotors (71, 72, 73, 74) cover assembly (10) comprises a further closing part (5) which comprises a further first seat (51) which houses the third shaft (83), a further second seat (52) which houses the fourth shaft (84), and between them, a further solid part (53);
- the further first seat (51) extends so that in the narrow position the further closing part (5) is movable with respect to the third shaft (83) by a third displacement in the first direction (T) in the second sense (T2), the further second seat (52) extends so that in the narrow position the further closing part (5) is movable with respect to the fourth shaft (84) by a fourth displacement in the first direction (T) in the first sense (T1) and the scalar sum of the third displacement and of the fourth displacement is greater than the second distance so as to allow a displacement between the first part (1) and the third part (3) that is greater than the second distance;
- the further solid part (53) extends so that in the extended position it is at the part of the further recess (32) not covered by the first part (1);
- the axes of rotation of the first cutting rotor (71), of the second cutting rotor (72), of the third cutting rotor (73) and of the fourth cutting rotor (74) are aligned along the first direction (T), i.e. they lie or substantially lie on the same vertical plane.

The second part (2) and the third part (3) preferably perform the same displacements with respect to the first part (1) but in opposite directions.

The transmission means (8) preferably comprise a gear box (89) configured to receive motion which is coupled to the shafts (81, 82, 83, 84) of the cutting rotors (71, 72, 73, 74), that is integral with the first part (1) and which is interposed between the first shaft (81) and the third shaft (83). In the displacement between the first position and the second position the second part (2) translates with respect to the first part (1), in the displacement between the narrow position and the extended position the third part (3) translates with respect to the first part (1) and the transmission means (8) comprise at least a connecting shaft (90) arranged according to the first direction (T) which couples the gear box (89) with the shafts (81, 82, 83, 84) of the cutting rotors (71, 72, 73, 74).

This configuration guarantees rapid and clear movements for the operator and an excellent transfer of the mechanical energy. The at least a connecting shaft (90) is preferably of the hexagonal type.

The cutting rotors (71, 72, 73, 74) preferably have a same diameter, in the second position the distance between the axes of rotation respectively of the first shaft (81) and of the second shaft (82) and of the third shaft (83) and of the fourth shaft (84) is smaller than the diameter of the cutting rotors (71, 72, 73, 74) and each cutting rotor (71, 72, 73, 74) comprises two cutting wings (9) radially opposite one another and arranged along a perpendicular direction with respect to the direction on which the cutter wings (9) of the adjacent cutting rotor or of the adjacent cutting rotors (71, 72, 73, 74).

In this way interferences are avoided, even when pushing the admissible overlapping between the cutting areas of the cutting rotors (71, 72, 73, 74), so as to guarantee excellent cutting results at any cutting width (W) and, at the same time, a compactness of the mower (100).

The first part (1), the second part (2) and the third part (3) are generally horizontal walls, typically made of metal sheeting. In general the metal sheeting is folded on the lateral edges, or connected to other elements such as for example the chains visible in figure 1, to further confine the cutting rotors (71, 72, 73, 74).

The mobility between the first part (1) and respectively the second part (2) and the third part (3) is obtained by movement means of known type.

In the embodiment of figure 1 the movement means comprise two linear actuators, especially a first and a second hydraulic cylinder (101). The translation between the second part (2) and the first part (1), and between the third part (3) and the first part (1) is guaranteed by sliding rods (102) which slide internally of guide tubes (103).

The accompanying drawings illustrate an embodiment of the mower (100) with the components required for the functioning thereof; those clearly known to the technical expert, such as for example the fittings and wheels, are only represented.

It is understood that the above has been described by way of non-limiting example and that any constructional variants are considered to fall within the protective scope of the present technical solution, as claimed in the following.

## Claims

1. A mower (100) with a variable cutting width (W) with respect to the movement direction (M) comprising:
- cutting rotors (71, 72, 73, 74) of a type having an axis of rotation (X) that is vertical with respect to the ground surface (S);
- transmission means (8) for transmitting the motion which comprise shafts (81, 82, 83, 84), each coupled to a respective cutting rotor (71, 72, 73, 74) so as to set the cutting rotor (71, 72, 73, 74) in rotation about a respective rotation axis (X);
- a cutting rotors (71, 72, 73, 74) cover assembly (10) comprising a first part (1) which has a first hole (11) housing a first shaft (81) coupled to a first cutting rotor (71) and rotationally connected to the first part (1) and a second part (2) which has a second hole (21) housing a second shaft (82) coupled to a second cutting rotor (72) and rotationally connected to the second part (2);
wherein the second part (2) and the first part (1) are mutually movable according to a first direction (T) transversal to the movement direction (M) of the mower (100) between a first position and a second position in which the distance between the second shaft (82) and the first shaft (81) is greater than in the first position so as to vary the cutting width (W), the mower (100) being **characterised in that:**
- the displacement in the first direction (T) of the second part (2) with respect to the first part (1) between the first position and the second position is greater than a first distance in the first direction (T) between the edges of the first hole (11) and the second hole (21) in the first position;
- the second part (2) has a recess (22) which faces towards the first shaft (81) so as to accommodate the first shaft (81) at least in the first position;
- the cutting rotors (71, 72, 73, 74) cover assembly (10) comprises a closing part (4) which comprises a first seat (41) which houses the first shaft (81), a second seat (42) which houses the second shaft (82) and, between the first and second shaft (81, 82), a solid part (43);
- the first seat (41) extends so that in the first position the closing part (4) is movable with respect to the first shaft (81) by a first displacement in the first direction (T) in a first sense (T1), the second seat (42) extends so that in the first position the closing part (4) is movable with respect to the second shaft (82) by a second displacement in the first direction (T) in a second sense (T2), opposite the first sense (T1) and the scalar sum of the first displacement and of the second displacement is greater than the first distance so as to allow a displacement between the first part (1) and the second part (2) that is greater than the first distance;
- the solid part (43) extends in the first direction (T) so as to be at the part of the recess (22) that is not covered by the first part (1).

2. The mower (100) of claim 1, wherein the second part (2) is interposed between the closing part (4) and the first part (1) and wherein the cutting rotors (71, 72, 73, 74) cover assembly (10) comprises at least a support that is integral with the first part (1) or to the second part (2) and which supports the closing part (4).

3. The mower (100) of claim 2, wherein the at least a support comprises a guide (6) integral with the second part (2) shaped in such a way that the closing part (4) translates with respect to the second part (2).

4. The mower (100) of any one of the preceding claims, wherein the transmission means (8) comprise a first gear box (85) which comprises a first case (85a) internally of which the first shaft (81) rotates and a second gear box (86) which comprises a second case (86a) internally of which the second shaft (82) rotates and wherein at least the second case (86a) engages the second hole (21) and the second seat (42) so to move the closing part (4) in the displacement between the first position and the second position.

5. The mower (100) of claim 4, wherein the first case (85a) engages the first hole (11) and the first seat (41), wherein both the first seat (41) and the second seat (42) are slots and wherein in the first position and in the second position the first case (85a) and the second case (86A) are in contact with or in proximity of the ends (41a, 41b, 42a, 42b) of the slots.

6. The mower (100) of any one of the preceding claims, wherein the radius (71a) of the first cutting rotor (71) and the radius (72a) of the second cutting rotor (72) is greater than the distance between the rotation axis (X) of the first cutting rotor (71) and the rotation axis (X) of the second cutting rotor (72) in the first position.

7. The mower (100) of any one of the preceding claims, comprising a third cutting rotor (73) and a fourth cutting rotor (74) on the side of the first cutting rotor (71) opposite the second cutting rotor (72), with the third cutting rotor (73) located between the first cutting rotor (71) and the fourth cutting rotor (74), wherein the rotation sense (71b, 72b, 73b, 74b) of each of the cutting rotors (71, 72, 73, 74) is opposite the rotation sense of the adjacent cutting rotor or of the adjacent cutting rotors (71, 72, 73, 74) and wherein the rotation sense (71b, 72b, 73b, 74b) is such as to push the grass respectively between the first cutting rotor (71) the second cutting rotor (72) and between the third cutting rotor (73) and the fourth cutting rotor (74), with the mower (100) moving in the movement direction (M) and in the movement sense.

8. The mower (100) of claim 7, wherein:
- the first part (1) comprises a further hole (12) housing a third shaft (83) coupled to the third cutting rotor (73) and rotationally connected to the first part (1);
- the cutting rotors (71, 72, 73, 74) cover assembly (10) comprises a third part (3) which has a third hole (31) housing a fourth shaft (84) coupled to the fourth cutting rotor (74) and rotationally connected to the third part (3);
- the third part (3) is movable with respect to the first part (1) according to the first direction (T) between a narrow position and a extended position in which the distance between the fourth shaft (84) and the third shaft (83) is greater than in the narrow position so as to cooperate with the second part (2) for varying the cutting width (W);
- the displacement in the first direction (T) of the third part (3) with respect to the first part (1) between the narrow position and the extended position is greater than a second distance in the first direction (T) between the edges of the further hole (12) and of the third hole (31) in the narrow position;
- the third part (3) has a further recess (32) which faces towards the third shaft (83) so as to accommodate the third shaft (83) at least in the narrow position;
- the cutting rotors (71, 72, 73, 74) cover assembly (10) comprises a further closing part (5) which comprises a further first seat (51) which houses the third shaft (83), a further second seat (52) which houses the fourth shaft (84), and between them, a further solid part (53);
- the further first seat (51) extends so that in the narrow position the further closing part (5) is movable with respect to the third shaft (83) by a third displacement in the first direction (T) in the second sense (T2), the further second seat (52) extends so that in the narrow position the further closing part (5) is movable with respect to the fourth shaft (84) by a fourth displacement in the first direction (T) in the first sense (T1) and the scalar sum of the third displacement and of the fourth displacement is greater than the second distance so as to allow a displacement between the first part (1) and the third part (3) that is greater than the second distance;
- the further solid part (53) extends so that in the extended position it is at the part of the further recess (32) not covered by the first part (1);
- the axes of rotation of the first cutting rotor (71), of the second cutting rotor (72), of the third cutting rotor (73) and of the fourth cutting rotor (74) are aligned along the first direction (T).

9. The mower (100) of claim 7 or 8, wherein the transmission means (8) comprise a gear box (89) configured to receive motion which is coupled to the shafts (81, 82, 83, 84) of the cutting rotors (71, 72, 73, 74), that is integral with the first part (1) and which is interposed between the first shaft (81) and the third shaft (83), wherein in the displacement between the first position and the second position the second part (2) translates with respect to the first part (1), wherein in the displacement between the narrow position and the extended position the third part (3) translates with respect to the first part (1) and wherein the transmission means (8) comprise at least a connecting shaft (90) arranged according to the first direction (T) which couples the gear box (89) with the shafts (81, 82, 83, 84) of the cutting rotors (71, 72, 73, 74).

10. The mower (100) of any one of claims from 7 to 9, wherein the cutting rotors (71, 72, 73, 74) have a same diameter, wherein in the second position the distance between the axes of rotation respectively of the first shaft (81) and of the second shaft (82) and of the third shaft (83) and of the fourth shaft (84) is smaller than the diameter of the cutting rotors (71, 72, 73, 74) and wherein each cutting rotor (71, 72, 73, 74) comprises two cutting wings (9) radially opposite one another and arranged along a perpendicular direction with respect to the direction on which the cutter wings (9) of the adjacent cutting rotor or of the adjacent cutting rotors (71, 72, 73, 74).

## Patentansprüche

1. Ein Mäher (100) mit einer variablen Schnittbreite (W) in Bezug auf die Bewegungsrichtung (M), umfassend:
- Schneidrotoren (71, 72, 73, 74) eines Typs mit einer Drehachse (X), die in Bezug auf die Bodenoberfläche (S) vertikal ist;
- Übertragungsmittel (8) zum Übertragen der Bewegung, die Wellen (81, 82, 83, 84) umfassen, die jeweils mit einem entsprechenden Schneidrotor (71, 72, 73, 74) gekoppelt sind, um den Schneidrotor (71, 72, 73, 74) in Drehung um eine entsprechende Drehachse (X) zu versetzen;
- eine Abdeckanordnung (10) für Schneidrotoren (71, 72, 73, 74), die einen ersten Teil (1), der ein erstes Loch (11) aufweist, in dem eine erste Welle (81) untergebracht ist, die mit einem ersten Schneidrotor (71) gekoppelt und drehbar mit dem ersten Teil (1) verbunden ist, und einen zweiten Teil (2) umfasst, der ein zweites Loch (21) aufweist, in dem eine zweite Welle (82) untergebracht ist, die mit einem zweiten Schneidrotor (72) gekoppelt und drehbar mit dem zweiten Teil (2) verbunden ist;
wobei der zweite Teil (2) und der erste Teil (1) gemäß einer ersten Richtung (T) quer zur Bewegungsrichtung (M) des Mähers (100) zwischen einer ersten Position und einer zweiten Position, in der der Abstand zwischen der zweiten Welle (82) und der ersten Welle (81) größer ist als in der ersten Position, gegenseitig beweglich sind, um die Schnittbreite (W) zu verändern, wobei der Mäher (100) **dadurch gekennzeichnet ist, dass**:
- die Verschiebung in der ersten Richtung (T) des zweiten Teils (2) in Bezug auf den ersten Teil (1) zwischen der ersten Position und der zweiten Position größer ist als ein erster Abstand in der ersten Richtung (T) zwischen den Kanten des ersten Lochs (11) und des zweiten Lochs (21) in der ersten Position;
- der zweite Teil (2) eine Ausnehmung (22) aufweist, die der ersten Welle (81) zugewandt ist, um die erste Welle (81) zumindest in der ersten Position aufzunehmen;
- die Abdeckanordnung (10) der Schneidrotoren (71, 72, 73, 74) einen Verschlussteil (4) umfasst, der einen ersten Sitz (41), der die erste Welle (81) aufnimmt, einen zweiten Sitz (42), der die zweite Welle (82) aufnimmt, und zwischen der ersten und der zweiten Welle (81, 82) einen massiven Teil (43) umfasst;
- der erste Sitz (41) sich so erstreckt, dass in der ersten Position das Schließteil (4) in Bezug auf die erste Welle (81) durch eine erste Verschiebung in der ersten Richtung (T) in einer ersten Richtung (T1) beweglich ist, der zweite Sitz (42) sich so erstreckt, dass in der ersten Position das Schließteil (4) in Bezug auf die zweite Welle (82) durch eine zweite Verschiebung in der ersten Richtung (T) in einer zweiten Richtung (T2) beweglich ist, entgegengesetzt zur ersten Richtung (T1) beweglich ist und die Skalarsumme der ersten Verschiebung und der zweiten Verschiebung größer als der erste Abstand ist, um eine Verschiebung zwischen dem ersten Teil (1) und dem zweiten Teil (2) zu ermöglichen, die größer als der erste Abstand ist;
- der massive Teil (43) sich in der ersten Richtung (T) erstreckt, so dass er sich in dem Teil der Aussparung (22) befindet, der nicht vom ersten Teil (1) bedeckt ist.

2. Mäher (100) nach Anspruch 1, wobei der zweite Teil (2) zwischen dem Verschlussteil (4) und dem ersten Teil (1) angeordnet ist und wobei die Abdeckungsbaugruppe (10) der Schneidrotoren (71, 72, 73, 74) mindestens eine Stütze umfasst, die mit dem ersten Teil (1) oder dem zweiten Teil (2) fest verbunden ist und den Verschlussteil (4) trägt.

3. Mäher (100) nach Anspruch 2, wobei die mindestens eine Stütze eine mit dem zweiten Teil (2) einstückige Führung (6) umfasst, die so geformt ist, dass sich der Schließteil (4) in Bezug auf den zweiten Teil (2) verschiebt.

4. Der Mäher (100) nach einem der vorhergehenden Ansprüche, wobei die Übertragungsmittel (8) ein erstes Getriebe (85) umfassen, das ein erstes Gehäuse (85a) umfasst, in dessen Innerem sich die erste Welle (81) dreht, und ein zweites Getriebe (86), das ein zweites Gehäuse (86a) umfasst, in dessen Innerem sich die zweite Welle (82) dreht, und wobei zumindest das zweite Gehäuse (86a) in das zweite Loch (21) und den zweiten Sitz (42) eingreift, um das Schließteil (4) bei der Verschiebung zwischen der ersten Position und der zweiten Position zu bewegen.

5. Der Mäher (100) nach Anspruch 4, wobei das erste Gehäuse (85a) in das erste Loch (11) und den ersten Sitz (41) eingreift, wobei sowohl der erste Sitz (41) als auch der zweite Sitz (42) Schlitze sind und wobei in der ersten Position und in der zweiten Position das erste Gehäuse (85a) und das zweite Gehäuse (86A) in Kontakt mit oder in der Nähe der Enden (41a, 41b, 42a, 42b) der Schlitze sind.

6. Der Mäher (100) nach einem der vorhergehenden Ansprüche, wobei der Radius (71a) des ersten Schneidrotors (71) und der Radius (72a) des zweiten Schneidrotors (72) größer ist als der Abstand zwischen der Drehachse (X) des ersten Schneidrotors (71) und der Drehachse (X) des zweiten Schneidrotors (72) in der ersten Position.

7. Der Mäher (100) nach einem der vorhergehenden Ansprüche, umfassend einen dritten Schneidrotor (73) und einen vierten Schneidrotor (74) auf der Seite des ersten Schneidrotors (71) gegenüber dem zweiten Schneidrotor (72), wobei der dritte Schneidrotor (73) zwischen dem ersten Schneidrotor (71) und dem vierten Schneidrotor (74) angeordnet ist, wobei die Drehrichtung (71b, 72b, 73b, 74b) jedes der Schneidrotoren (71, 72, 73, 74) der Drehrichtung des benachbarten Schneidrotors oder der benachbarten Schneidrotoren (71, 72, 73, 74) entgegengesetzt ist und wobei die Drehrichtung (71b, 72b, 73b, 74b) derart ist, dass das Gras zwischen den ersten Schneidrotor (71), den zweiten Schneidrotor (72) und zwischen den dritten Schneidrotor (73) und den vierten Schneidrotor (74) geschoben wird, wobei sich der Mäher (100) in der Bewegungsrichtung (M) und in der Bewegungsrichtung bewegt.

8. Der Mäher (100) nach Anspruch 7, wobei:
- der erste Teil (1) eine weitere Öffnung (12) umfasst, in der eine dritte Welle (83) untergebracht ist, die mit dem dritten Schneidrotor (73) gekoppelt und mit dem ersten Teil (1) drehbar verbunden ist;
- die Abdeckbaugruppe (10) der Schneidrotoren (71, 72, 73, 74) ein drittes Teil (3) umfasst, das ein drittes Loch (31) aufweist, in dem eine vierte Welle (84) untergebracht ist, die mit dem vierten Schneidrotor (74) gekoppelt und drehbar mit dem dritten Teil (3) verbunden ist;
- der dritte Teil (3) in Bezug auf den ersten Teil (1) gemäß der ersten Richtung (T) zwischen einer schmalen Position und einer ausgefahrenen Position, in der der Abstand zwischen der vierten Welle (84) und der dritten Welle (83) größer ist als in der schmalen Position, beweglich ist, um mit dem zweiten Teil (2) zur Veränderung der Schnittbreite (W) zusammenzuwirken;
- die Verschiebung in der ersten Richtung (T) des dritten Teils (3) in Bezug auf das erste Teil (1) zwischen der engen Position und der ausgefahrenen Position größer ist als ein zweiter Abstand in der ersten Richtung (T) zwischen den Rändern des weiteren Lochs (12) und des dritten Lochs (31) in der engen Position;
- der dritte Teil (3) eine weitere Ausnehmung (32) aufweist, die der dritten Welle (83) zugewandt ist
um die dritte Welle (83) zumindest in der engen Stellung aufzunehmen;
- die Abdeckungsbaugruppe (10) der Schneidrotoren (71, 72, 73, 74) ein weiteres Verschlussteil (5) umfasst, das einen weiteren ersten Sitz (51), der die dritte Welle (83) aufnimmt, einen weiteren zweiten Sitz (52), der die vierte Welle (84) aufnimmt, und dazwischen ein weiteres massives Teil (53) umfasst;
- der weitere erste Sitz (51) sich so erstreckt, dass in der engen Position das weitere Verschlussteil (5) in Bezug auf die dritte Welle (83) durch eine dritte Verschiebung in der ersten Richtung (T) in der zweiten Richtung (T2) beweglich ist, der weitere zweite Sitz (52) sich so erstreckt, dass in der engen Position der weitere Verschlussteil (5) in Bezug auf die vierte Welle (84) um eine vierte Verschiebung in der ersten Richtung (T) im ersten Sinn (T1) beweglich ist und die Skalarsumme der dritten Verschiebung und der vierten Verschiebung größer als der zweite Abstand ist, um eine Verschiebung zwischen dem ersten Teil (1) und dem dritten Teil (3) zu ermöglichen, die größer als der zweite Abstand ist;
- der weitere massive Teil (53) sich so erstreckt, dass er sich in der ausgefahrenen Position an dem Teil der weiteren Aussparung (32) befindet, der nicht von dem ersten Teil (1) bedeckt ist;
- die Drehachsen des ersten Schneidrotors (71), des zweiten Schneidrotors (72), des dritten Schneidrotors (73) und des vierten Schneidrotors (74) entlang der ersten Richtung (T) ausgerichtet sind.

9. Der Mäher (100) nach Anspruch 7 oder 8, wobei die Übertragungsmittel (8) ein Getriebe (89) umfassen, das so konfiguriert ist, dass es eine Bewegung aufnimmt, die mit den Wellen (81, 82, 83, 84) der Schneidrotoren (71, 72, 73, 74) gekoppelt ist, das mit dem ersten Teil (1) einstückig ist und das zwischen der ersten Welle (81) und der dritten Welle (83) angeordnet ist, wobei sich der zweite Teil (2) bei der Verschiebung zwischen der ersten Position und der zweiten Position in Bezug auf den ersten Teil (1) verschiebt, wobei sich der dritte Teil (3) bei der Verschiebung zwischen der schmalen und der ausgefahrenen Position in Bezug auf den ersten Teil (1) verschiebt und wobei die Übertragungsmittel (8) mindestens eine Verbindungswelle (90) umfassen, die in der ersten Richtung (T) angeordnet ist und das Getriebe (89) mit den Wellen (81, 82, 83, 84) der Schneidrotoren (71, 72, 73, 74) koppelt.

10. Der Mäher (100) nach einem der Ansprüche 7 bis 9, wobei die Schneidrotoren (71, 72, 73, 74) den gleichen Durchmesser haben, wobei in der zweiten Position der Abstand zwischen den Drehachsen der ersten Welle (81) und der zweiten Welle (82) bzw. der dritten Welle (83) und der vierten Welle (84) kleiner ist als der Durchmesser der Schneidrotoren (71, 72, 73, 74) kleiner ist als der Durchmesser der Schneidrotoren (71, 72, 73, 74) und wobei jeder Schneidrotor (71, 72, 73, 74) zwei Schneidflügel (9) aufweist, die einander radial gegenüberliegen und in einer Richtung angeordnet sind, die senkrecht zu der Richtung verläuft, in der die Schneidflügel (9) des benachbarten Schneidrotors oder der benachbarten Schneidrotoren (71, 72, 73, 74) liegen.

## Revendications

1. Tondeuse (100) à largeur de coupe (W) variable par rapport à la direction de déplacement (M) comprenant :
- des rotors de coupe (71, 72, 73, 74) d'un type ayant un axe de rotation (X) vertical par rapport à la surface du sol (S) ;
- des moyens de transmission (8) pour transmettre le mouvement qui comprennent des arbres (81, 82, 83, 84), chacun couplé à un rotor de coupe respectif (71, 72, 73, 74) de manière à faire tourner le rotor de coupe (71, 72, 73, 74) autour d'un axe de rotation respectif (X) ;
- un ensemble de recouvrement des rotors de coupe (71, 72, 73, 74) (10) comprenant une première partie (1) dotée d'un premier trou (11) abritant un premier arbre (81) couplé à un premier rotor de coupe (71) et relié en rotation à la première partie (1) et une seconde partie (2) dotée d'un second trou (21) abritant un second arbre (82) couplé à un second rotor de coupe (72) et relié en rotation à la seconde partie (2) ;
dans lequel la deuxième partie (2) et la première partie (1) se déplacent mutuellement selon une première direction (T) transversale à la direction de mouvement (M) de la tondeuse (100) entre une première position et une deuxième position dans laquelle la distance entre le deuxième arbre (82) et le premier arbre (81) est plus grande que dans la première position de manière à faire varier la largeur de coupe (W), la tondeuse (100) étant **caractérisée par le fait que** :
- le déplacement dans la première direction (T) de la deuxième partie (2) par rapport à la première partie (1) entre la première position et la deuxième position est supérieur à une première distance dans la première direction (T) entre les bords du premier trou (11) et du deuxième trou (21) dans la première position ;
- la seconde partie (2) présente un renfoncement (22) orienté vers le premier arbre (81) de manière à accueillir le premier arbre (81) au moins dans la première position ;
- l'ensemble de recouvrement des rotors de coupe (71, 72, 73, 74) (10) comprend une partie de fermeture (4) qui comprend un premier siège (41) qui loge le premier arbre (81), un deuxième siège (42) qui loge le deuxième arbre (82) et, entre le premier et le deuxième arbre (81, 82), une partie solide (43) ;
- le premier siège (41) s'étend de manière à ce que, dans la première position, la partie de fermeture (4) soit mobile par rapport au premier arbre (81) par un premier déplacement dans la première direction (T) dans un premier sens (T1), le deuxième siège (42) s'étend de manière à ce que, dans la première position, la partie de fermeture (4) soit mobile par rapport au deuxième arbre (82) par un deuxième déplacement dans la première direction (T) dans un deuxième sens (T2), opposé au premier sens (T1) et la somme scalaire du premier déplacement et du deuxième déplacement est supérieure à la première distance de manière à permettre un déplacement entre la première partie (1) et la deuxième partie (2) qui est supérieur à la première distance ;
- la partie solide (43) s'étend dans la première direction (T) de manière à se trouver dans la partie de l'évidement (22) qui n'est pas couverte par la première partie (1).

2. La tondeuse (100) de la revendication 1, dans laquelle la deuxième partie (2) est interposée entre la partie de fermeture (4) et la première partie (1) et dans laquelle l'ensemble de recouvrement des rotors de coupe (71, 72, 73, 74) (10) comprend au moins un support qui est solidaire de la première partie (1) ou de la deuxième partie (2) et qui supporte la partie de fermeture (4).

3. La tondeuse (100) de la revendication 2, dans laquelle le au moins un support comprend un guide (6) solidaire de la seconde partie (2) conformé de telle sorte que la partie de fermeture (4) se translate par rapport à la seconde partie (2).

4. La tondeuse (100) de l'une quelconque des revendications précédentes, dans laquelle les moyens de transmission (8) comprennent une première boîte de vitesses (85) qui comprend un premier boîtier (85a) à l'intérieur duquel le premier arbre (81) tourne et une deuxième boîte de vitesses (86) qui comprend un deuxième boîtier (86a) à l'intérieur duquel le deuxième arbre (82) tourne et dans laquelle au moins le deuxième boîtier (86a) engage le deuxième trou (21) et le deuxième siège (42) de manière à déplacer la partie de fermeture (4) dans le déplacement entre la première position et la deuxième position.

5. La tondeuse (100) de la revendication 4, dans laquelle le premier boîtier (85a) engage le premier trou (11) et le premier siège (41), dans laquelle le premier siège (41) et le second siège (42) sont des fentes et dans laquelle, dans la première position et dans la seconde position, le premier boîtier (85a) et le second boîtier (86A) sont en contact ou à proximité des extrémités (41a, 41b, 42a, 42b) des fentes.

6. La tondeuse (100) de l'une quelconque des revendications précédentes, dans laquelle le rayon (71a) du premier rotor de coupe (71) et le rayon (72a) du second rotor de coupe (72) est supérieur à la distance entre l'axe de rotation (X) du premier rotor de coupe (71) et l'axe de rotation (X) du second rotor de coupe (72) dans la première position.

7. La tondeuse (100) de l'une quelconque des revendications précédentes, comprenant un troisième rotor de coupe (73) et un quatrième rotor de coupe (74) sur le côté du premier rotor de coupe (71) opposé au deuxième rotor de coupe (72), le troisième rotor de coupe (73) étant situé entre le premier rotor de coupe (71) et le quatrième rotor de coupe (74), dans lequel le sens de rotation (71b, 72b, 73b, 74b) de chacun des rotors de coupe (71, 72, 73, 74) est opposé au sens de rotation du premier rotor de coupe (71, 72, 73, 74) dans la première position, 74) est opposé au sens de rotation du rotor de coupe adjacent ou des rotors de coupe adjacents (71, 72, 73, 74) et dans lequel le sens de rotation (71b, 72b, 73b, 74b) est tel qu'il pousse l'herbe respectivement entre le premier rotor de coupe (71), le deuxième rotor de coupe (72) et entre le troisième rotor de coupe (73) et le quatrième rotor de coupe (74), la tondeuse (100) se déplaçant dans la direction de mouvement (M) et dans le sens de mouvement.

8. La tondeuse (100) de la revendication 7, dans laquelle :
- la première partie (1) comprend un autre trou (12) abritant un troisième arbre (83) couplé au troisième rotor de coupe (73) et relié en rotation à la première partie (1) ;
- l'ensemble de recouvrement des rotors de coupe (71, 72, 73, 74) (10) comprend une troisième partie (3) qui comporte un troisième trou (31) abritant un quatrième arbre (84) couplé au quatrième rotor de coupe (74) et relié en rotation à la troisième partie (3) ;
- la troisième partie (3) est mobile par rapport à la première partie (1) selon la première direction (T) entre une position étroite et une position étendue dans laquelle la distance entre le quatrième arbre (84) et le troisième arbre (83) est plus grande que dans la position étroite, de manière à coopérer avec la deuxième partie (2) pour faire varier la largeur de coupe (W) ;
- le déplacement dans la première direction (T) de la troisième partie (3) par rapport à la première partie (1) entre la position étroite et la position étendue est supérieur à une deuxième distance dans la première direction (T) entre les bords du trou supplémentaire (12) et du troisième trou (31) dans la position étroite ;
- la troisième partie (3) présente un autre renfoncement (32) orienté vers le troisième arbre (83)
afin de loger le troisième arbre (83) au moins dans la position étroite ;
- l'ensemble de recouvrement des rotors de coupe (71, 72, 73, 74) (10) comprend une autre partie de fermeture (5) qui comprend un autre premier siège (51) qui loge le troisième arbre (83), un autre deuxième siège (52) qui loge le quatrième arbre (84), et entre eux, une autre partie solide (53) ;
- le premier siège (51) s'étend de manière à ce que, dans la position étroite, l'autre pièce de fermeture (5) soit mobile par rapport au troisième arbre (83) par un troisième déplacement dans la première direction (T) dans le deuxième sens (T2), le second siège supplémentaire (52) s'étend de telle sorte que, dans la position étroite, la partie de fermeture supplémentaire (5) soit mobile par rapport au quatrième arbre (84) selon un quatrième déplacement dans la première direction (T) dans le premier sens (T1) et que la somme scalaire du troisième déplacement et du quatrième déplacement soit supérieure à la deuxième distance de manière à permettre un déplacement entre la première partie (1) et la troisième partie (3) qui soit supérieur à la deuxième distance ;
- la partie solide supplémentaire (53) s'étend de telle sorte qu'en position déployée, elle se trouve sur la partie de l'évidement supplémentaire (32) qui n'est pas couverte par la première partie (1) ;
- les axes de rotation du premier rotor de coupe (71), du deuxième rotor de coupe (72), du troisième rotor de coupe (73) et du quatrième rotor de coupe (74) sont alignés le long de la première direction (T).

9. La tondeuse (100) de la revendication 7 ou 8, dans laquelle les moyens de transmission (8) comprennent une boîte de vitesses (89) configurée pour recevoir un mouvement qui est couplé aux arbres (81, 82, 83, 84) des rotors de coupe (71, 72, 73, 74), qui est solidaire de la première partie (1) et qui est interposée entre le premier arbre (81) et le troisième arbre (83), dans laquelle dans le déplacement entre la première position et la deuxième position la deuxième partie (2) se translate par rapport à la première partie (1), dans laquelle, lors du déplacement entre la position étroite et la position étendue, la troisième partie (3) se déplace par rapport à la première partie (1) et dans laquelle les moyens de transmission (8) comprennent au moins un arbre de liaison (90) disposé selon la première direction (T) qui couple la boîte de vitesses (89) avec les arbres (81, 82, 83, 84) des rotors de coupe (71, 72, 73, 74).

10. La tondeuse (100) de l'une quelconque des revendications 7 à 9, dans laquelle les rotors de coupe (71, 72, 73, 74) ont un même diamètre, dans laquelle, dans la deuxième position, la distance entre les axes de rotation respectivement du premier arbre (81) et du deuxième arbre (82) et du troisième arbre (83) et du quatrième arbre (84) est inférieure au diamètre des rotors de coupe (71, 72, 73, 74) et dans laquelle, dans la deuxième position, la distance entre les axes de rotation respectivement du premier arbre (81) et du deuxième arbre (82) et du troisième arbre (83) et du quatrième arbre (84) est plus petite que le diamètre des rotors de coupe (71, 72, 73, 74) et dans lequel chaque rotor de coupe (71, 72, 73, 74) comprend deux ailes de coupe (9) radialement opposées l'une à l'autre et disposées le long d'une direction perpendiculaire par rapport à la direction dans laquelle les ailes de coupe (9) du rotor de coupe adjacent ou des rotors de coupe adjacents (71, 72, 73, 74).
